# EUROPEAN PATENT SPECIFICATION

(11) **EP 2 195 147 B1**
(45) Date of publication and mention of the grant of the patent: **19.10.2011**
(21) Application number: 08788862.4
(22) Date of filing: 07.07.2008
(51) Int. Cl.: B29C 31/04, B29C 43/08, B29C 43/34

(54) **APPARATUS FOR TRANSFERRING OBJECTS**
VORRICHTUNG ZUR ÜBERTRAGUNG VON OBJEKTEN
APPAREIL DE TRANSFERT D'OBJETS

(30) Priority: 29.08.2007 IT MO20070272
(43) Date of publication of application: 16.06.2010
(73) Proprietor: SACMI Cooperativa Meccanici Imola Società Cooperativa, 40026 Imola (Bologna) (IT)
(72) Inventor: ZUFFA, Zeno, I-40021 Borgo Tossignano (BO) (IT); CAVINA, Giambattista, I-48018 Faenza (RA) (IT); PARRINELLO, Fiorenzo, I-40059 Medicina (BO) (IT)
(74) Representative: Persi, Patrizia
(86) International application number: PCT/IB2008/001773
(87) International publication number: WO 2009/027777

(56) References cited:
- WO-A-2005/102646
- WO-A-2006/109108
- US-A1- 2007 196 531

## Description

The invention relates to an apparatus for transferring objects. In particular, the apparatus can transfer a dose of plastics to a forming device to form a preform from which it is possible to obtain a container, in particular, a bottle. Moreover, the apparatus can also transfer a container or a container preform.

Apparatuses are known for compression-moulding objects of plastics, for example, preforms for bottles, comprising a rotating moulding carousel which carries a plurality of moulds each comprising a die and a punch. During the rotation, each die receives a dose of plastics in a pasty state. The dose is pressed between the die and the relative punch along a circumference arch covered by the moulding carousel. The pressing step is followed by the opening of the mould and removal of the moulded object from the apparatus. Each dose is obtained by cutting a plastics in the form of a continuous extruded product coming out of an extruder or plasticization device. The apparatus further comprises a transferring carousel having a plurality of transferring elements which remove the doses just cut in succession and transfer them to the moulding carousel.

Each transferring element comprises an upper element having a "U" or "C" shaped transverse cross-section so as to define an open channel on one side, i.e. provided with an removing opening, and a tubular-shaped lower element, defining a transfer chamber communicating with the open channel and having an openable bottom.

The doses removed through the removing opening fall, generally only by gravity, in the transfer chamber and therefrom are deposited into a cavity of the die, when the bottom is opened, while the die is below the transferring element.

The plastics which constitutes the doses tends to adhere to the surfaces with which it comes in contact, due to its pasty state.

In particular, since the doses slide on the inner surface of the transfer chamber, while passing through the above-mentioned components, the movement of the doses may not be easily controllable.

In order to control the passage of the doses through the transfer chamber in the best possible manner - in particular, in order to obtain sure and repeatable travelling times through the transfer chamber - there is provided to adjust the temperature of the lower element (particularly of the transfer chamber) and/or to check the degree of humidity of the plastics and of the environment (microclimate) in which the transferring carousel is installed and/or to make suitable surface finishes of the walls which internally delimit the transfer chamber (in particular obtaining adequately rough walls provided with micro-grooves having a predefined orientation) and/or to provide surface coatings, particularly with low surface energy and with self-cleaning properties on the above-mentioned walls.

One defect of known transferring carousels consists in the fact that it is very difficult to keep the inner walls of the transfer chambers clean. These inner walls tend to get dirty with residues of plastics formed by the rubbing of the doses on the inner walls and the progressive deposition of small layers obtained by precipitation of the hot vapours of plastics which get fixed in the colder areas of the surfaces of the inner walls on which the rubbing takes place. In addition, this defect is particularly significant if not negligible quantities of additives, such as colorants, particularly colorants containing, for example, waxes, various oils including Vaseline, etc, have been added to the plastics which forms the doses.

The residues deposited on the above-mentioned inner walls progressively alter the transfer speed of the doses leading to situations which are limiting for the operating process. If this speed does not fall within the predefined intervals, it occurs that the doses are not inserted inside the moulds in the correct times and in the correct ways.

One further defect of known transferring carousels is that the roughness of the inner walls of the transfer chambers may be altered by interaction with the doses (wear due to pitting).

With reduction in the roughness (i.e. in case of polished surfaces and those tending to be shiny) the doses tend to adhere more to the inner surfaces, due to the effect of the wider contact surfaces between the doses and the inner walls as well as due to the absence of separating air (fluid film) between the doses and the inner walls. In the rough walls, micro-channels are defined inside which air is present which facilitates the movement (sliding) of the doses.

To reduce the contact between the lower element and the dose, the inner walls of the transfer chamber can be made of porous material. A supply device sends a flow of pressurized air into the transfer element. The flow of air, coming out through the porous material, forms a layer of air between the inner walls and the dose. The air layer reduces the contacts between the dose and the transfer chamber.

US 2007/0196531 discloses an apparatus to be used in the compression-moulding of dosed quantities of plastics to obtain preforms for containers, comprising forming means movable along a first path for compression moulding the doses and a plurality of transfer chambers for transferring the doses to the forming means. In particular, each transfer chamber comprises anti-adhesion means, comprising pressurised gas forming a gap between the dose and the internal contact surface of the chamber. The gas is supplied through the side walls of the chamber, in particular through porous side walls or through non-porous side walls in which nevertheless numerous holes are provided. The anti-adhesion means of the transfer chamber may also comprise a thermally conditioned side walls obtained by thermo-conditioning the gas supplied to the chamber, side walls vibrating at a value of frequency that reduces the adhesion phenomenon or side walls coated a thin layer of anti-adhesion material.

The known apparatuses, consequently, must comprise a supply device for supplying each transfer chamber with pressurized air, which considerably complicates the structure of the apparatus and increases the costs.

In addition to worsening the economic yield, significant quantities of air, even at moderate pressure, inside the transfer chambers can alter the shapes and dimensions of the doses which, being in a pasty state, are easily deformable. Such alterations of the shapes and dimensions of the doses can lead to poor quality finished products.

Moreover, even if the layer of air is present, the dose can incline inside the transfer chamber in an undesirable manner and subsequently not position itself correctly inside the die cavity, for example, by adhering to the walls of the die cavity before reaching the bottom. This leads to a nonuniform distribution of the plastics in the die cavity, which can cause defects in the preform and therefore in the bottle. Moreover, the porous materials do not ensure a correct and uniform distribution of the pressurized air inside the transfer chamber, this is also due to the residues of plastics which adhered to the inner walls of the transfer chambers.

The transfer chambers must include at least one portion having a diameter very close to that of the dose and a length similar to that of the dose so as to guide the doses inside the die cavity.

If the dose inclines inside the transfer chamber, impacts may occur between the dose and the inner surface of the transfer chamber, slowing down the dose as it moves towards the die cavity. Moreover, the impacts between the dose and the inner surface of the transfer chamber can alter the surface quality of the dose, causing folds and deformation of its outermost layers.

In conclusion, the use of transfer chambers made of porous material causes a considerable increase in the manufacturing complexity - and consequently in the costs - without making it possible to obtain significant improvement in the transfer of the doses. Moreover, the transfer chambers made of porous material change their performances over time.

The lower element may comprise a device for generating, inside the transfer chamber, a fluid cushion arranged above the doses, to promote a rapid exit of the doses from the transfer chamber.

This device is quite expensive. Moreover, the efficacy of the device may be significantly reduced due to the above-mentioned residues of plastics. To overcome the above-mentioned reduction of the efficiency it may be hypothesized to progressively increase the power of the fluid with reduction of the dose transfer speed. However, this cannot be implemented in practice since it would cause unacceptable deterioration of the doses and consequently, of the objects obtained from these.

An object of the invention is to improve the apparatuses for transferring objects, in particular doses of flowable material, particularly in compression moulding of plastics.

A further object is to provide an apparatus for transferring objects, particularly doses of flowable material, which is constructively simple and reliable.

Another object is to provide an apparatus comprising transferring means for transferring doses of flowable material towards forming means, in which the doses move easily and fast inside the transferring means.

A further object is to provide an apparatus in which the transferring means guides the doses of flowable material with precision while the doses of flowable material pass from the transferring means to the forming means.

According to the invention, an apparatus is provided as defined in claim 1.

Owing to the invention, it is possible to obtain an apparatus in which an object can be received easily and fast inside the transferring means and can be guided with precision during the passage from the transferring means to the receiving means.

The above-mentioned receiving means can comprise forming means for forming an object from a dose of flowable material.

In one embodiment of the apparatus, the driving means changes the size of the passage section during an operating cycle of the apparatus.

In a first step of the operating cycle of the apparatus, the driving means positions the wall means so that the passage section assumes a widened configuration. In this case, when the dose is introduced in the transferring means, the contact between the dose and the wall means takes place on portions of the wall means having highly reduced extension. Therefore, the dose does not adhere significantly to the wall means and penetrates inside the transferring means at high speed. The efficiency of the apparatus is, therefore, high. Moreover, the wall means does not tend to get dirty with residues of flowable material, for example, plastics. In a subsequent step of the operating cycle of the apparatus, the driving means positions the wall means so that the passage section assumes a narrowed configuration. In this case, the wall means aligns the dose in relation to the forming means and guides with precision the dose which is inside the tubular recess, thereby reducing the risk that the dose inclines during the passage from the transferring means to the forming means. The impacts between the dose and the wall means are thus reduced. The dose is kept aligned along a desired direction and can be introduced more easily in the forming means.

When the wall means is in the widened configuration, the contact with the dose occurs in highly reduced extension areas, which considerably reduces the heat exchange between the dose and the wall means, and consequently the tendency of the dose to adhere to the wall means.

In another embodiment of the apparatus, the driving means changes the shape of the passage section during an operating cycle of the apparatus.

Since the shape of the passage section changes - in particular substantially continuously - while the dose passes through it, the wall means directs the dose towards an outlet opening of the recess and thereby the dose passes faster through the recess.

Moreover, since the shape of the passage section varies, the wall means is subjected to a vibration which considerably limits the risk that the dose adheres to the wall means.

In both the embodiments disclosed above, the wall means may comprise rolling means which further facilitate the passage of the dose through the recess. In this case, the contact between the dose and the transferring means occurs on portions of rolling means having a highly reduced extension. In these portions, there is rolling - not sliding - of the dose on the wall means. Owing to this, the dose can move inside the transferring means at a very high speed.

The rolling means, for example rollers, are easily available, reliable and less expensive mechanical components.

Owing to the invention, it is possible to eliminate or, in any case, reduce to a minimum, the use of pressurized fluid, possibly thermally conditioned, to propel and move the dose at the beginning of the ejection from the transferring means and during the introduction in the forming means. The delivery of pressurized fluid, when provided, takes place for a very short time.

The invention may be better understood and implemented with reference to the attached drawings which illustrate some embodiments thereof by way of non-limiting examples, in which:
Figure 1 is a schematic plan view of an apparatus comprising transferring means for transferring doses of plastics to forming means;
Figure 2 is a section taken along a longitudinal plane of the transferring means in an operating configuration;
Figure 3 is a section like the one in Figure 2 which shows the transferring means in a further operating configuration;
Figure 4 is a section like the one in Figure 2 which shows the transferring means in a still further operating configuration;
Figure 5 is a schematic plan view of wall means of the transferring means of Figure 2;
Figure 6 is a section taken along a longitudinal plane of transferring means made according to a variation, in an operating configuration;
Figure 7 is a section like the one in of Figure 6 which shows the transferring means in a further operating configuration;
Figure 8 is a section like the one in of Figure 6 which shows the transferring means in a still further operating configuration;
Figure 9 is a schematic plan view of wall means of the transferring means of Figure 6;
Figure 10 is a front view of a wall portion of the wall means of Figure 9 provided with rolling elements;
Figure 11 is a front view of a further wall portion of the wall means of Figure 9 provided with rolling elements;
Figure 12 is a section taken along a longitudinal plane of transferring means made according to a further variation;
Figure 13 is a schematic plan view of wall means of the transferring means of Figure 12;
Figure 14 is a section taken along a longitudinal plane of transferring means made according to a still further variation;
Figure 15 is a section taken along a longitudinal plane of transferring means made according to a still further variation;
Figure 16 is a detail of Figure 15;
Figure 17 is a section taken along a longitudinal plane of wall means of the transferring means of Figure 14;
Figure 18 is a detail of Figure 14 which shows a piston element of driving means provided in the transferring means;
Figure 19 is a plan view of the piston element of Figure 18;
Figure 20 is a further plan view of the piston element of
Figure 18;

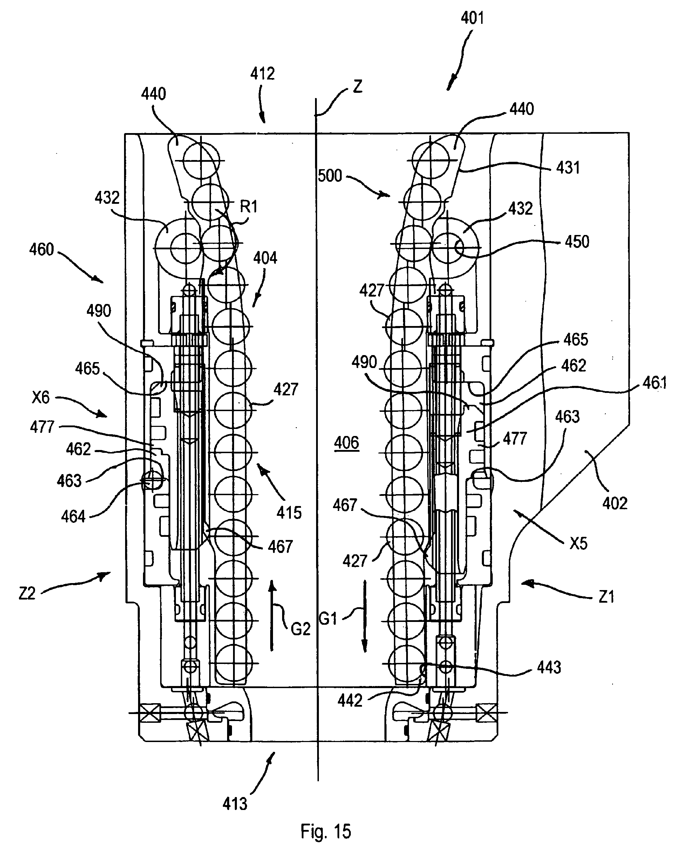

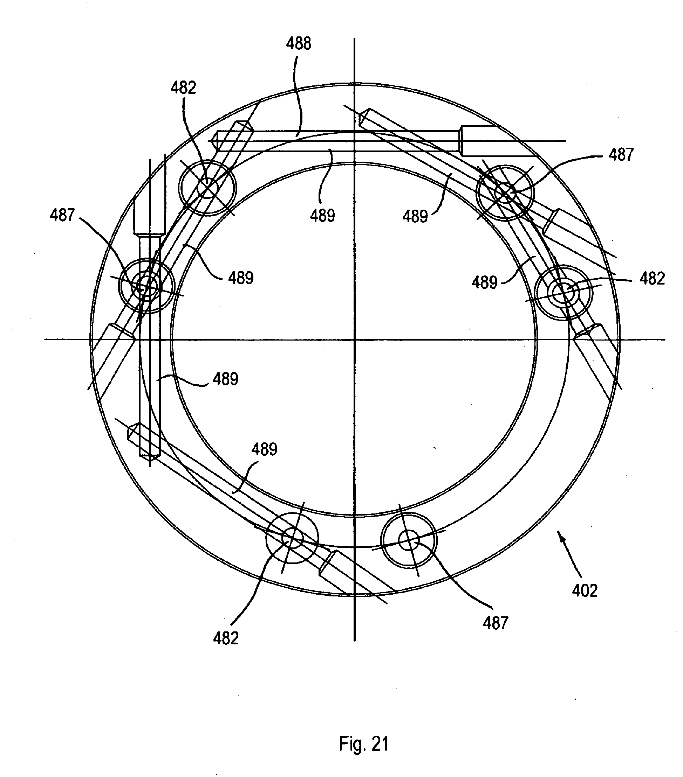

Figure 21 is a cross-section of a lower portion of the transferring means of Figure 15 which shows supply conduit means and discharge conduit means of a cooling fluid.

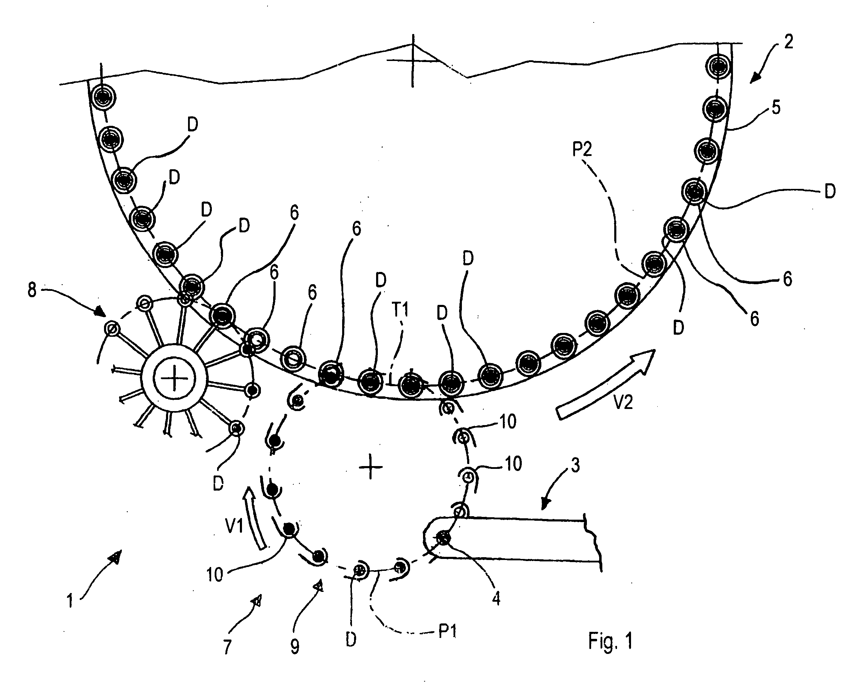

With reference to Figure 1, an apparatus 1 is shown comprising a transferring device 7 for moving objects of various types. In particular, the transferring device 7 transfers doses D of plastics to forming means comprising a moulding device 2 for moulding preforms. From the preforms it is possible to obtain containers, for example, bottles, by stretch-blow-moulding.

The doses D can be made with various types of plastics, for example polyethylenetherephthalate (PET), poly propylene (PP), polyvinylchloride (PVC), high density polyethylene (HDPE), polyethylenenaphthalate (PEN), polystyrene (PS) or polylactic acid (PLA).

To obtain the preforms, the doses D have an elongated shape and usually have an approximately circular cross-section. It is however possibly, in principle, to also use doses of different shapes, if compression-moulding of objects different from preforms is desired.

The doses D are delivered by delivering means 3 comprising a plastics extruder, provided with a mouth 4 through which a plastics in a pasty state exits. The mouth 4 may be facing downwards so that the plastics exits from the extruder along a vertical direction of extrusion.

Cutting means is provided, not shown, for cutting the plastics exiting from the mouth 4 so as to define the doses D.

The moulding device 2 comprises a carousel 5 rotatable around a substantially vertical axis in a direction V2 shown in Figure 1, and supporting a plurality of moulds each comprising a die 6 and a punch, not shown. Each die 6 comprises a cavity suitable for interacting with the corresponding punch for compression-moulding of the dose D received previously in the die cavity, during a moulding step.

The apparatus 1 further comprises an extractor device 8 for removing the preforms from the corresponding moulds and moving them away from the moulding device 2. In an embodiment not shown, the apparatus may be devoid of the extractor device 8 and the preforms can be removed from the moulding device 2 by the transferring device 7 itself, which delivers the doses D to the dies 6.

The transferring device 7 is arranged for transferring the doses D from the mouth 4 of the extruder to the cavities of the dies 6. The transferring device 7 comprises a further carousel 9 rotatable around a vertical axis, in a further direction V1 shown in Figure 1, and supporting transferring means including a plurality of transferring elements 10 movable substantially continuously along a closed loop path P1.

The closed loop path P1 is at a higher level as compared to a circular path P2 along which the dies 6 and the corresponding punches move. It is possible to identify a section T1 in which the closed loop path P1 coincides substantially with the circular path P2. Along the section T1 the transferring elements 10 are moved substantially at the same speed as the dies 6 so that each transferring element 10 lies above a die cavity while being moved along section T1.

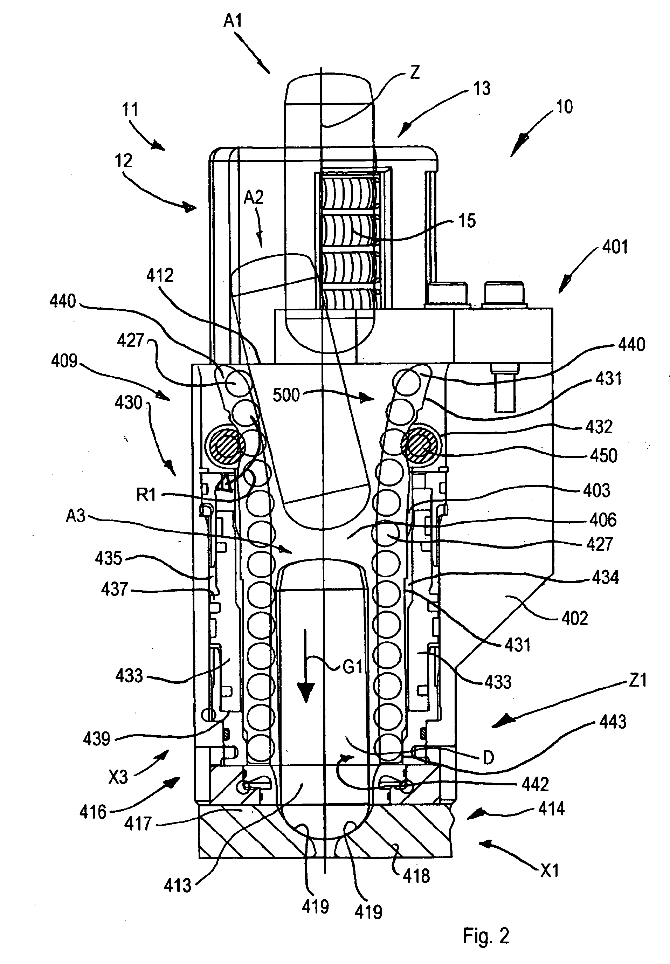

Each transferring element 10 comprises an upper element 11 (Figure 2) and a lower element 401 (Figure 2).

The upper element 11 has a "U" or "C" shaped cross-section so as to define an open channel on one side which extends along a longitudinal axis Z. A recess 13 (Figure 2) is identified inside the upper element 11. A lateral opening 12 (Figure 2), obtained parallel to longitudinal axis Z, makes it possible to enter the recess 13.

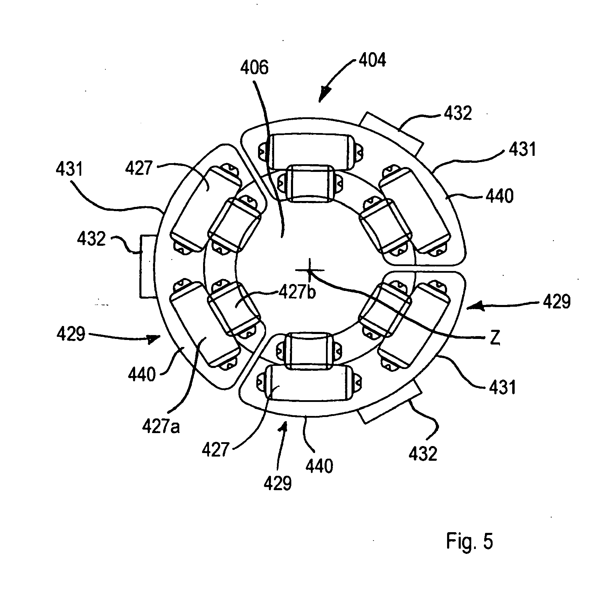

The upper element 11 picks up a dose D just cut by the cutting means, near the mouth 4 of the extruder. The dose D is housed in the recess 13, inside which the dose D drops by gravity, but for frictions, towards the lower element 401, with an independent trajectory, also depending on the weight thereof and the position of the centre of gravity thereof. With reference to Figures 2 to 4, a lower element 401 is shown, comprising a supporting block 402 supported by the further carousel 9 and provided with a seat 403 inside which tubular element means 404 is housed, shown in Figure 5, intended for receiving a dose coming from the upper element 11. The tubular element means 404 comprises a plurality of wall portions 440, which have an elongated shape along the longitudinal axis Z.

Each wall portion 440 identifies an angular sector of the tubular element means 404. The wall portions 440 are mutually placed side by side so as to identify a transfer chamber 406 shaped like a tubular recess.

The wall portions 440 define wall means 500 which delimits the transfer chamber 406 internally.

The wall portions 440 are positioned in relation to one another so as to reduce the discontinuities of the wall means 500 to the minimum.

The transfer chamber 406 is arranged for housing the dose D while the corresponding transferring element 10 moves along the closed loop path P1.

The tubular element means 404 comprises an inlet opening 412 which extends on a plane transverse in relation to the longitudinal axis Z and through which a dose D is received in the transfer chamber 406.

The inlet opening 412 may have a cross-section with shape and dimensions substantially coinciding with those of the recess 13. This avoids discontinuities in the passage from the upper element 11 to the transfer chamber 406.

The tubular element means 404 further comprises an outlet opening 413 through which the dose D exits from the transfer chamber 406.

The wall portions 440 comprise rolling elements 415 arranged for interacting with the dose D and guiding the dose D. The rolling elements 415 comprise rollers 427. Each wall portion 440 supports a plurality of rollers 427. The rollers 427 have respective axes substantially transverse to the longitudinal axis Z and can be slightly convex towards the outside.

The rollers 427 mounted on a same wall portion 440 are substantially aligned along the longitudinal axis Z - to form one or more rows of rollers 429 arranged substantially parallel to the longitudinal axis Z - and partially face inside the transfer chamber 406 to interact with the dose D. As shown in Figure 5, the tubular element means 404 comprises three wall portions 440 which identify circular sectors having a substantially angular extension of 120°. Each wall portion 440 supports two rows of rollers 429 arranged along the longitudinal axis Z one alongside the other.

Each row of rollers 429 may comprise rollers 427 having different dimensions.

In particular, a first portion of each row of rollers 429 arranged near an upper area 409 of lower element 401 comprises first rollers 427a and a second portion of each row of rollers 429 arranged near a lower area 416 of the lower element 401 comprises second rollers 427b, the second rollers 427b having a longitudinal extension less than that of the first rollers 427a.

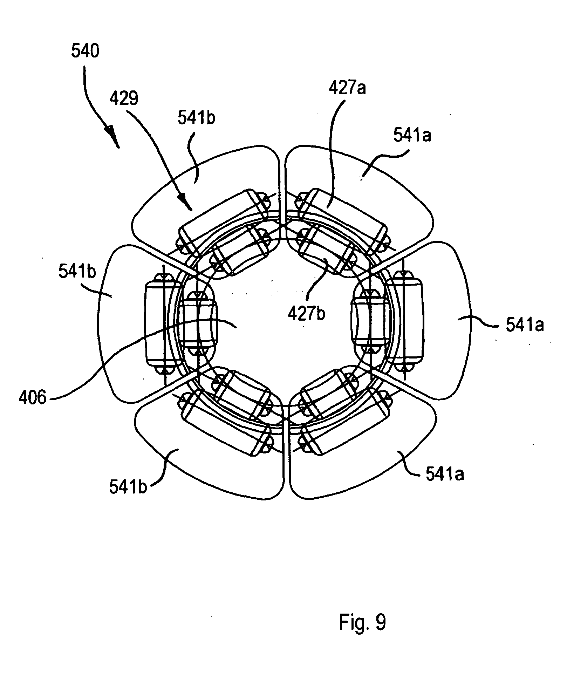

Alternatively, the tubular element means 404 may comprise a number of wall portions 440 different from three. For example, similar to what is shown in Figures 9 to 11 which will be disclosed in detailed below, the tubular element means may comprise six wall portions 440 which identify circular sectors having a substantially angular extension of 60°.

The transfer chamber 406 is arranged for receiving a dose D, retaining the dose D and delivering the dose D to the die 6. While passing through the transfer chamber 406, the dose D comes across the first rollers 427a and then the second rollers 427b.

Each wall portion 440 is rotatably connected to the supporting block 402. In particular, each wall portion is hinged to the supporting block 402 near the inlet opening 412. Alternatively, each wall portion is hinged to the supporting block 402 near the outlet opening 413.

Each wall portion 440 comprises a protrusion 432 provided on a face 431 of the wall portion 440 which faces the seat 403. A hole 450 is obtainde in the protrusion 432 for receiving a pivot. Each wall portion 440 is rotatably supported by the supporting block 402, in particular, each wall portion 440 can rotate around an axis transverse to the longitudinal axis Z and arranged at the protrusion 432.

The lower element 401 further comprises driving means 430 arranged for moving the wall portions 440.

The driving means 430 comprises elastic means, not shown, at the protrusion 432. The elastic means, for example torsion springs, acts on wall portions 440 so that each wall portion 440 rotates around the above-mentioned pivot in a direction of rotation R1.

The driving means 430 further comprises a piston element 433. The piston element 433 has a ring shape and is received in chamber means 434 interposed between the supporting block 402 and the tubular element means 404. The piston element 433 can slide inside the chamber means 434 along the longitudinal axis Z. The piston element 433 comprises a first projection 437 and a second projection 438 which identify in the chamber means 434 a first chamber 435 and a second chamber 436.

The driving means 430 further comprises a supply device, not shown, arranged for supplying with a fluid, for example pressurized air, the first chamber 435 and the second chamber 436. The piston element 433 therefore acts like a double-action actuator.

When the supply device introduces the fluid into the first chamber 435, the piston element 433 is moved along the longitudinal axis Z according to a direction G1 until the piston element 433 assumes a first operating configuration X3, shown in Figure 2. In the first operating configuration X3 the piston element 433 is arranged abutting on an abutting surface 439 which delimits the chamber means 434 below.

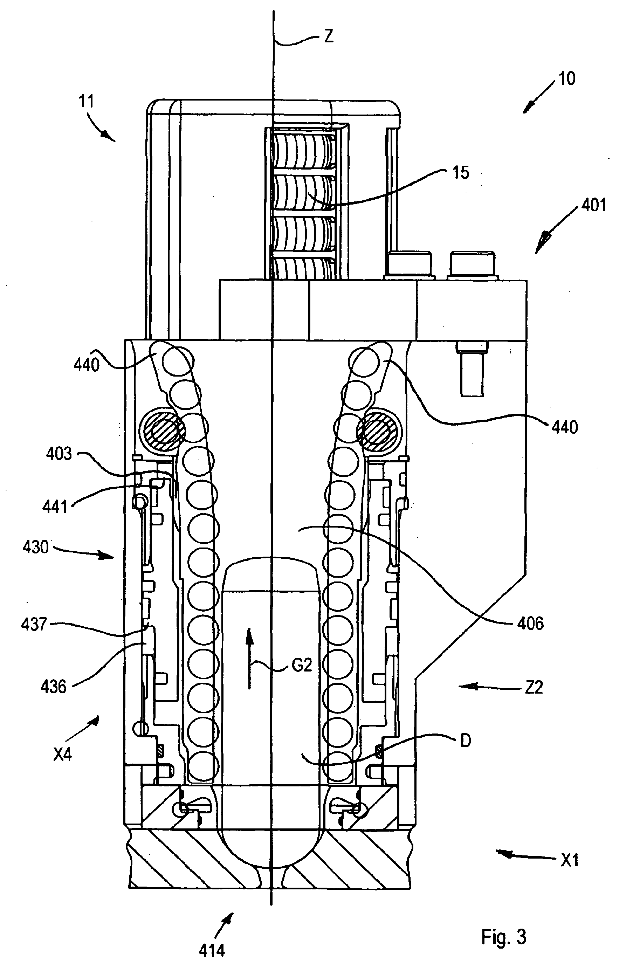

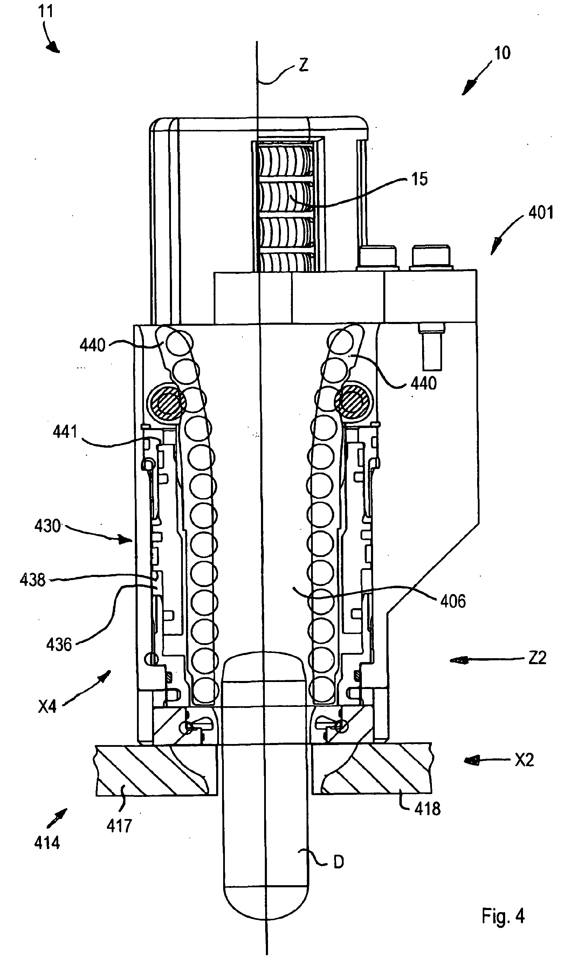

When the supply device introduces the fluid into the second chamber 436, the piston element 433 is moved along the longitudinal axis Z in a further direction G2 until the piston element 433 assumes a second operating configuration X4, shown in Figures 3 and 4.

In the second operating configuration X4, the piston element 433 is arranged abutting on a further abutting surface 441 which delimits the chamber means 434 above.

In the first operating configuration X3, the piston element 433, is not in contact with the wall portions 440. The elastic means positions the wall portions 440 in a widened configuration Z1, shown in Figure 2, in which the passage section of a dose D through the transfer chamber 406 is maximum. In particular, in the widened configuration Z1, an end 442 of each wall portion 440 rests laterally on an abutting area 443 arranged near the further outlet opening 413.

In the second operating configuration X4, the piston element 433, interacts with the wall portions 440. In this way, each wall portion 440, by overcoming the resistance of the elastic means, rotates in a further direction of rotation, opposite the direction of rotation R1. The piston element 433 positions the wall portions 440 in a narrowed configuration Z2, shown in Figures 3 and 4, in which the passage section of a dose D through the transfer chamber 406 is minimum.

In the narrowed configuration Z2, the wall portions 440 - and in particular, the rolling elements 415 - guide the dose D during the transfer from the lower element 401 to moulding device 2.

The lower element 401 further comprises closure means 414 arranged near the outlet opening 413.

The closure means 414 comprises a first closure element 417 and a second closure element 418 movable between a closed configuration X1, shown in Figures 2 and 3, in which the first closure element 417 and the second closure element 418 prevent the dose D from passing through the outlet opening 413 to exit from the transfer chamber 406, and an open configuration X2, shown in Figure 4, in which the first closure element 417 and the second closure element 418 allow the dose D to pass through the outlet opening 413 to exit from the transfer chamber 406.

The lower element 401 further comprises a driving device, not shown, arranged for moving the first closure element 417 and the second closure element 418 from the closed configuration X1 to the open configuration X2, and vice versa.

The first closure element 417 and the second closure element 418 comprise inner wall portions 419 having a profile such as to shape a tip area of a dose D contained in the transfer chamber 406.

Upper elements 11 can be associated to the lower elements 401 disclosed with reference to Figures 2 to 4, which upper elements 11 are provided with rolling means 15 reducing the risk that the doses D adhere to the recess 13 and allowing the doses to be transferred from the upper elements 11 to the lower elements 401 at high speed.

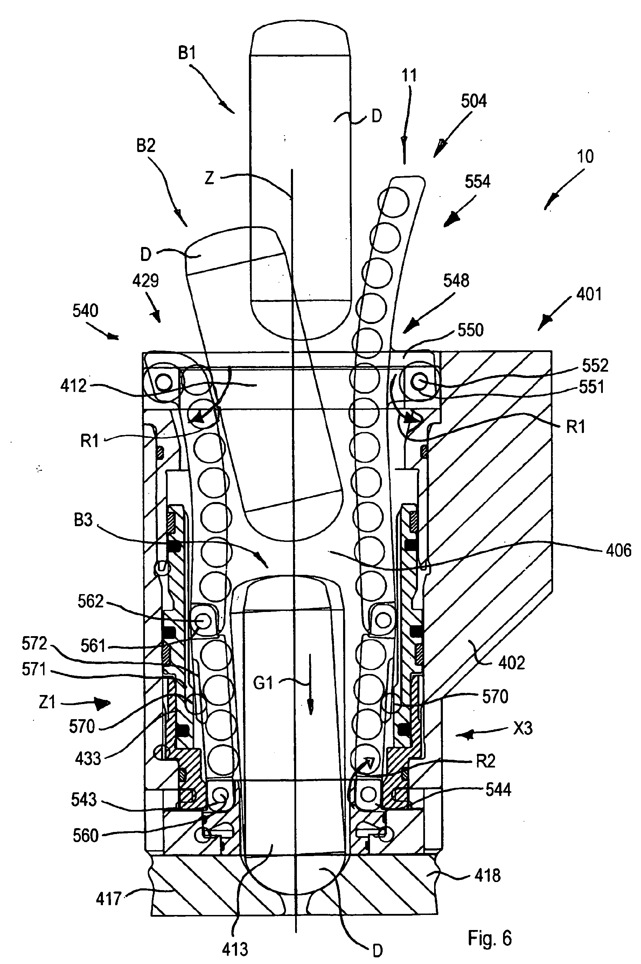

Alternatively, the wall portions 440 may have lengths that are mutually different. In this case, some of the wall portions 440 may comprise areas which project outside the transfer chamber 406 to define the upper element 11, similar to that shown in Figures 6 to 8 and 11 to 13.

Further, alternatively, known type of upper elements can be associated, i.e. without rolling means, to the lower elements 401 disclosed with reference to Figures 2 to 4. During the working of apparatus 1, the further carousel 9 moves the transferring elements 10 along the closed loop path P1, bringing them in succession near the mouth 4, while the cutting means separates the doses D from the extruder. Each dose D, after being cut, enters through the side opening 12 in the recess 13 of a transferring element 10. After receiving the dose D, the transferring element 10 moves it along the closed loop path P1 towards the moulding device 2. Simultaneously, the dose D drops by gravity into the recess 13. The rolling means, if present, facilitates the movement of the dose D inside the recess 13. In this way, the dose D can move according to the direction G1 inside the recess 13 easier than would be the case if the dose D were to slide along a continuous surface delimiting the inside of the recess 13.

Before the transferring element 10 reaches the section T1, the dose D enters entirely in the transfer chamber 406. The piston element 433 is arranged in the first operating configuration X3 and the wall portions 440 are arranged in the widened configuration Z1. Since the wall portions 440 are in the widened configuration Z1, the passage section of the dose D through the transfer chamber 406 is greater than a cross-section of the dose D. The dose D, therefore, interacts with the wall portions 440 at highly reduced extension areas. This limits the friction, and consequently, the risks that the dose D adheres to the wall portions 440. The dose D, therefore, slides fast inside the transfer chamber 406 until it rests on the first closure element 417 and on the second closure element 418 which are in the closed configuration X1. If the wall portions 440 are provided with the rolling elements 415, as shown in Figures 2 to 5, it is possible to obtain very high sliding speed of the dose D.

Figure 2 shows the same dose D in three subsequent positions, a first position A1, in which the dose D is picked up by the upper element 11, a second position A2, in which the dose D penetrates inside the lower element 401, and a third position A3 in which the dose D rests on the first closure element 417 and on the second closure element 418.

Subsequently, the piston element 433 passes from the first operating configuration X3 to the second operating configuration X4 and the wall portions 440 pass from the widened configuration Z1 to the narrowed configuration Z2. The passage section of the dose D through the transfer chamber 406 narrows so that wall portions 440 - in particular the rolling elements 415 - interact with the dose D. In this manner, a longitudinal axis of the dose D is kept substantially parallel to the longitudinal axis Z. In particular, the dose D is arranged in a position closer to the vertical one as compared to the position in which it is kept when the wall portions 440 are in the widened configuration Z1.

The transferring element 10, when arranged at the die 6, transfers the dose D in the cavity of the die 6. The first closure element 417 and the second closure element 418 are positioned in the open configuration X2 and the dose D moves towards the die 6 below remaining substantially parallel to the longitudinal axis Z. The rolling elements 415 thus interact in succession with an intermediate portion of the dose and with a "tail" portion of the dose, while a "head" portion of the dose starts (and continues) to penetrate inside the dies 6.

Since the intermediate portion and the "tail" portion of the dose D are guided by the wall portions 440, by means of the rolling elements 415, also the "head" portion of the dose D arranges itself correctly in relation to the die 6. In particular, (frontal and lateral) impacts are avoided between the dose D and the die 6 which could prevent the dose D from entering the die 6 completely.

The wall portions 440 - and the rolling elements 415 provided in the wall portions 440 - therefore have a guiding and positioning function for the dose D.

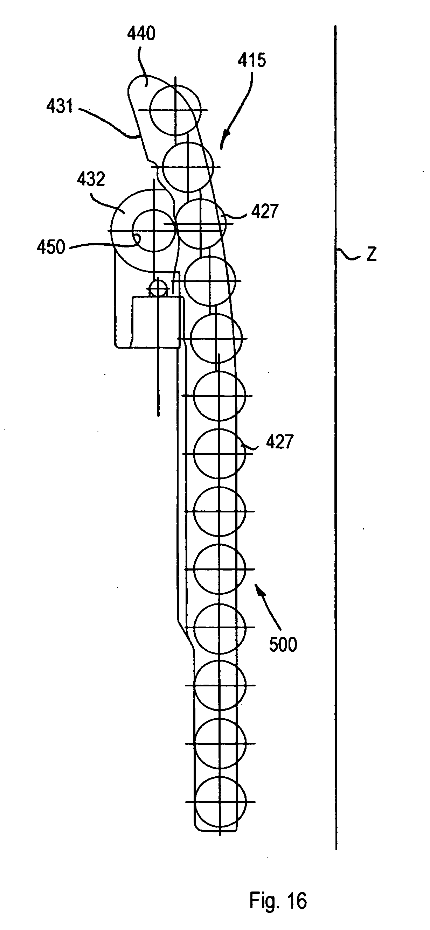

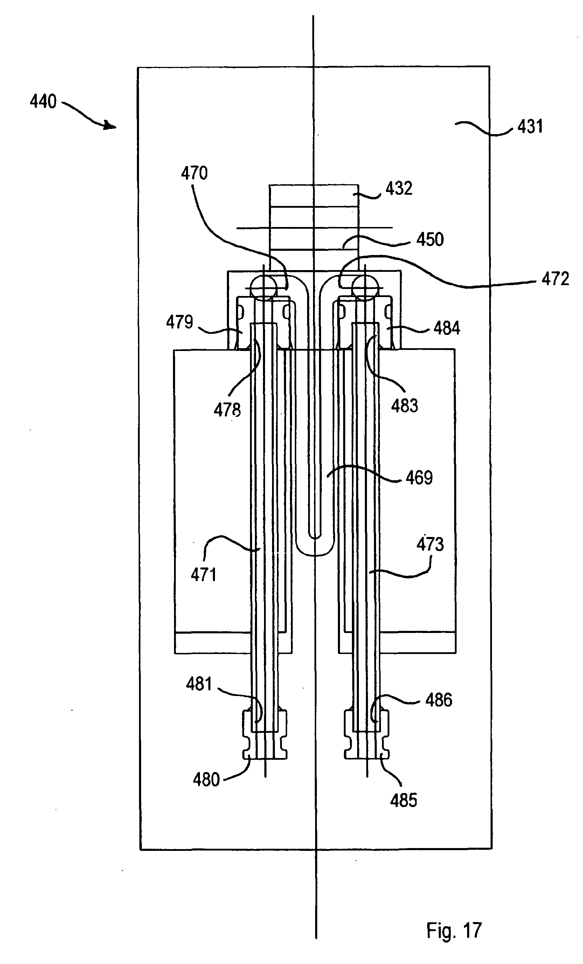

With reference to Figures 15 to 21, a lower element 401 is shown, comprising driving means 460 arranged for moving the wall portions 440, which are made according to a variation. The driving means 460 comprises elastic means, not shown, arranged at the protrusion 432. The elastic means, for example torsion springs, acts on the wall portions 440 so that each wall portion 440 rotates around the above-mentioned pivot in a direction of rotation R1.

The driving means 460 further comprises a piston element 461. The piston element 461 has a ring shape and comprises a projecting body 477 which is received in chamber means 462 interposed between the supporting block 402 and the tubular element means 404. The piston element 461 can slide along the longitudinal axis Z.

The driving means 460 further comprises a supply device, not shown, arranged for supplying with a fluid, for example, pressurized air, the chamber means 462 for moving the piston element 461 against the action of contrast means, for example compression springs, not shown. The piston element 461 therefore acts as a single-action actuator.

When the supply device does not introduce the fluid into the chamber means 462, the contrast means, for example the compression springs, moves the piston element 461 along the longitudinal axis Z according to the direction G1 until the piston element 461 assumes a first operating configuration X5, shown in the right part of Figure 15. In the first operating configuration X5 the piston element 461 is arranged abutting on an abutting surface 463 which delimits the chamber means 462 below.

When the supply device introduces the fluid into the chamber means 462 - through opening means 464 - the piston element 461 is moved along the longitudinal axis Z according to a further direction G2 until the piston element 461 assumes a second operating configuration X6, shown in the left part of Figure 15.

In the second operating configuration X6, the piston element 461 is arranged abutting on a further abutting surface 465 which delimits the chamber means 462 above.

When the piston element 461 is in the first operating configuration X5, the elastic means positions the wall portions 440 in the widened configuration Z1, shown in the right part of Figure 15, in which the passage section of a dose D through the transfer chamber 406 is maximum. In particular, in the widened configuration Z1, the end 442 of each wall portion 440 rests laterally on the abutting area 443 arranged near the further outlet opening 413.

In the second operating configuration X6, the piston element 461 interacts with the wall portions 440. In this way, each wall portion 440, by overcoming the resistance of the elastic means, rotates in a further direction of rotation, opposite the direction of rotation R1. The piston element 461 positions the wall portions 440 in the narrowed configuration Z2, shown in the left part of Figure 15, in which the passage section of a dose D through the transfer chamber 406 is minimum.

In the narrowed configuration Z2, the wall portions 440 - and in particular, the rolling elements 415 - guide the dose D during the stop step inside the transfer chamber 406 (i.e. when the dose D rests on the first closure element 417 and on the second closure element 418, not shown in Figure 15, which are in the closed configuration X1) and during the subsequent transfer step from the lower element 401 to the moulding device 2.

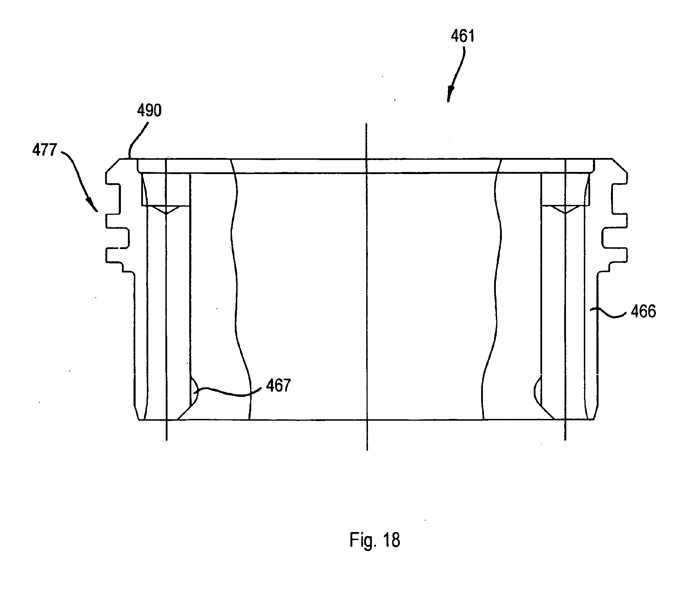

As shown in Figures 18 to 20, the piston element 461 comprises a sleeve 466 provided with a projection 467 which leads towards an inner area of the piston element 461. The projection 467 is arranged for interacting with the face 431 of the wall portions 440, or with an abutting means provided in the face 431, when the piston element 461 passes from the first operating configuration X5 to the second operating configuration X6. The projection 467 thus moves the wall portions 440 from the widened configuration Z1 to the narrowed configuration Z2.

The sleeve 466 comprises a hole 475 arranged for receiving a pin 476 which prevents the piston element 461 from rotating around the longitudinal axis Z when the piston element 461 passes from the first operating configuration X5 to the second operating configuration X6, and vice versa.

The sleeve 466 further comprises a plurality of holes 468 arranged for receiving the contrast means, for example the compression springs, which tend to maintain the piston element 461 in the operating configuration X5.

In the embodiment shown in Figures 15 to 21, the tubular element means 404 comprises three wall portions 440 which identify circular sectors having a substantially angular extension of 120°. In this case, six holes 468 are provided in the sleeve 466, i.e. two holes 468 at each wall portion 440.

In particular, the holes 468 are obtained in an upper portion 490 of the sleeve 466 intended to abut against the further abutting surface 465 when the piston element 461 is in the second operating configuration X6.

A cooling conduit 469 is provided inside each wall portion 440. The cooling conduit 469 can extend along a predefined path, in order to optimize the cooling of the wall portion 440.

The cooling conduit 469 comprises an inlet portion 470 connected to a supply tube 471 which supplies the cooling conduit 469 with a cooling fluid and an outlet portion 472 connected to a discharge tube 473 which removes the cooling fluid from the cooling conduit 469.

The cooling fluid may be thermo-regulated so as to be maintained at a prefixed temperature.

The sleeve 466 comprises a plurality of cavities 474 - shaped like grooves extending substantially parallel to the longitudinal axis Z - arranged for housing the supply tubes 471 and the discharge tubes 473. The cavities may have substantially parallel sides 491 or mutually converging sides moving away from the longitudinal axis Z.

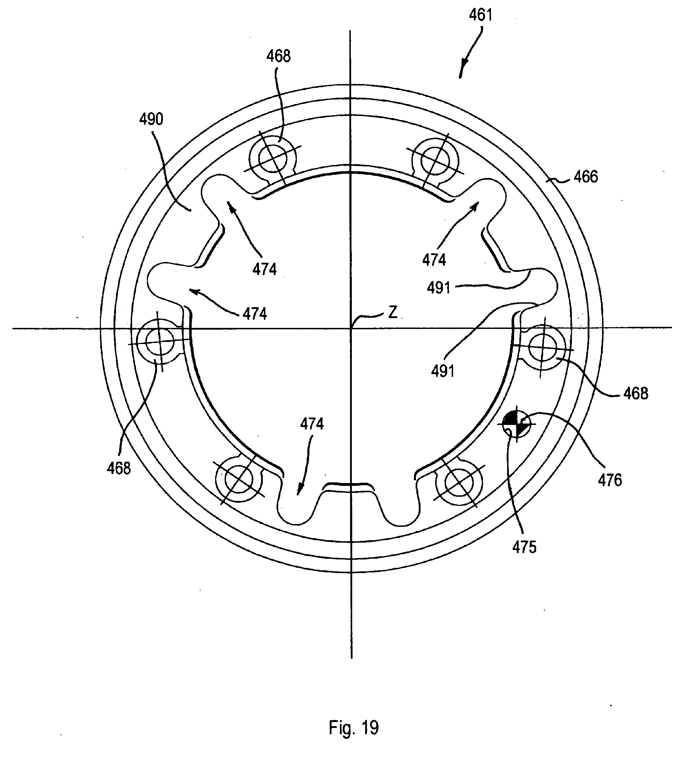

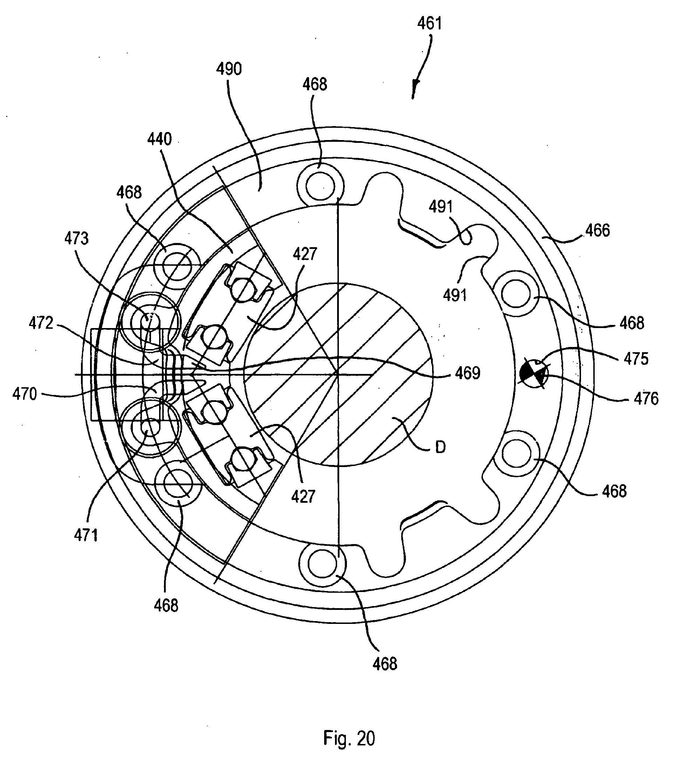

In the embodiment shown in Figures 19 and 20, two cavities 474 are provided at each wall portion 440, i.e. a first cavity which houses the supply tube 471 and a second cavity which houses the discharge tube 473.

A first connecting tubular element 479 is interposed between a first end 478 of the supply tube 471 and the inlet portion 470.

A second connecting tubular element 480 is interposed between a second end 481 of the supply tube 471 and a tube element 482 provided in the supporting block 402.

Similarly, a further first connecting tubular element 484 is interposed between a further first end 483 of the supply tube 473 and the outlet portion 472.

A further second connecting tubular element 485 is interposed between a further second end 486 of the discharge tube 473 and a further tube element 487 provided in the supporting block 402.

As shown in Figure 21, supply conduit means 488 is provided in the supporting block 402 which interconnects the tube elements 482 corresponding to each wall portion 440 to supply the supply tubes 471 associated with each wall portion 440 with the cooling fluid. The supply conduit means 488 may comprise a plurality of rectilinear portions 489 mutually intersecting. The rectilinear portions can be obtained by blind perforations. The opening made by the drilling tool is closed with a plug, not shown.

Moreover, in the supporting block 402 discharge conduit means is provided which interconnects the further tube elements 487 corresponding to each wall portion 440 to receive the cooling fluid coming from the discharge tubes 473 associated with each wall portion 440. The discharge conduit means comprises a plurality of rectilinear portions 489 mutually intersecting. The rectilinear portions can be obtained by blind perforations. The opening made by the drilling tool is closed by a plug.

The perforations that form the supply conduit means 488 and the perforations that form the discharge conduit means are made in the supporting block 402 at different vertical heights, so as not to mutually intersect.

During the working, the cooling fluid coming from the supply conduit means 488 reaches the supply tube 471 of each wall portion 440 passing through the corresponding tube element 482.

Subsequently, the cooling fluid flows inside each of the cooling conduits 469 cooling the respective wall portion 440.

Further subsequently, the cooling fluid flows through the discharge tube 473 of each wall portion 440 and, passing through the further tube elements 487, reaches the discharge conduit means.

The driving means 460 - and in particular, the piston element 461 - disclosed with reference to Figures 15 and 21, can be used also in combination with wall means 500 of the type shown in Figures 6 to 14, i.e. wall means 500 provided with wall portions 540 each comprising a first wall portion 542 and a second wall portion mutually hinged.

An upper element 11 can be associated to the lower element 401 disclosed with reference to Figures 15 to 21, which upper element 11 is provided with rolling means 15 reducing the risk that the doses D adhere to the recess 13 and allowing the doses to be transferred from the upper element 11 to the lower element 401 at high speed.

Alternatively, the wall portions 440 may have lengths that are mutually different. In this case, some of the wall portions 440 can comprise areas which project outside the transfer chamber 406 to define the upper element 11, similar to that shown in Figures 6 to 8 and 11 to 13.

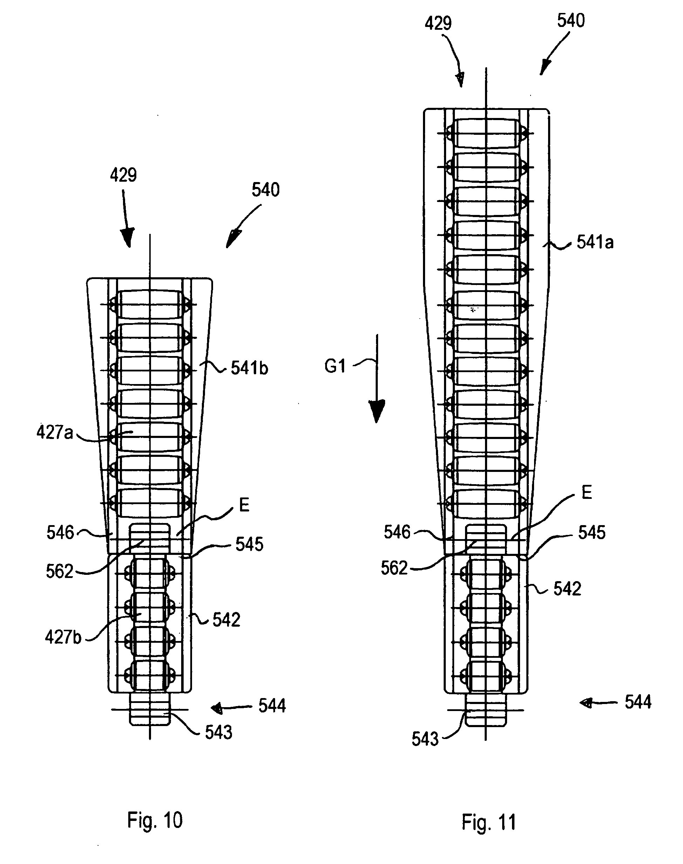

Further alternatively, known type of upper elements, i.e. without rolling means, can be associated to the lower element 401 disclosed with reference to Figures 15 to 21. With reference to Figures 6 to 8, a transferring element 10 is shown, comprising tubular element means 504 comprising wall portions 540. The wall portions 540 define wall means 500 which internally delimit the transfer chamber 406. Each wall portion 540, as shown in detail in Figures 10 and 11, comprises a first wall portion 542 and a second wall portion 541 aligned along a direction substantially parallel to the longitudinal axis Z. The second wall portion 541 is arranged upstream of the first wall portion 542 along the direction G1. In other words, the second wall portion 541 is nearer the inlet opening 412, while the first wall portion 542 is nearer the outlet opening 413.

The first wall portion 542 comprises an end 544 hinged, near the outlet opening 413, to a substantially tubular part which is inserted inside the block 402 and from which it receives also a thermal conditioning. In particular, a first hole 543 is obtained in the end 544 arranged to receive a first pivot 560.

The first wall portion 542 further comprises a further end 545, opposite the end 544, which is hinged to an end area 546 of the second wall portion 541. In particular, a second hole 561 is obtainned in the end area 546 in which a second pivot 562 is received which engages also with the first wall portion 542. In this way, the first wall portion 542 and the second wall portion 541 rotate in relation to one another around the second pivot 562. The second wall portion 541 is rotatably supported by the supporting block 402. The second wall portions 541 may be of two different types: a first type comprises longer second wall portions 541a and a second type comprises shorter second wall portions 541b.

The longer second wall portions 541a extend partially outside the seat 403.

Each longer second wall portion 541a comprises a protrusion 550 which extends from a central area 548 towards the seat 403. The protrusion 550 is hinged to the supporting block 402. A third hole 551 is obtained in the protrusion 550 in which a third pivot 552 is received which engages (directly, or indirectly by interposing a proper ring-shaped element) also in the supporting block 402 near the inlet opening 412. The shorter second wall portions 541b are shorter than the longer second wall portions 541a and do not extend outside the seat 403.

Each shorter second wall portion 541a comprises a further end area 549, opposite the end area 546, in which a fourth hole 563 is obtained. In the fourth hole 563 a fourth pivot 564 is received which engages (directly, or indirectly by interposing a proper ring-shaped element) also in supporting block 402 near inlet opening 412.

Each wall portion 540 supports a plurality of rollers 427. In particular, the rollers 427 mounted on a same wall portion 540 are substantially aligned along the longitudinal axis Z to form a row 429. The rollers 427 partially face inside the transfer chamber 406 to interact with the dose D. With reference to Figure 9, the tubular element means 504 comprises six wall portions 540 which define circular sectors having a substantially angular extension of 60° and each of which support a row of rollers 429.

Alternatively, the tubular element means 504 can comprise a number of wall portions 540 different from six. Moreover, each wall portion 540 can support more than one row of rollers 429.

Each wall portion 540 may comprise rollers 427 having different dimensions. Moreover, the rollers 427 can be positioned in a same row of rollers 429 with different pitches.

As shown in Figures 9 to 11, each second wall portion 541 may comprise first rollers 427a and each first wall portion 542 may comprise second rollers 427b having a longitudinal extension that is lesser than that of the first rollers 427a.

The longer second wall portions 541a are arranged side by side so that the portions of these projecting out of the seat 403 define an upper wall 554 having a "U" or "C" shaped cross-section. The upper wall 554 defines the upper element 11.

The lower element 501 further comprises driving means 530 arranged for moving the wall portions 540.

The driving means 530 comprises a piston element 433 movable between the first operating configuration X3 and the second operating configuration X4 with the methods disclosed with reference to the driving means 430 shown in Figures 2 to 4. A driving roller 570, or a ball element, is arranged between the piston element 433 and each wall portion 542. A part of the driving roller 570, or of the ball element, is received in a first guide groove 571 provided in an area of the piston element 433 which faces the wall portions 540. A further part of the driving roller 570, or of the ball element, is received in a second guide groove 572 provided in an area of each first wall portion 542 which faces the piston element 433.

The driving means 530 comprises elastic means, not shown, arranged at the further end area 549 and of the protrusion 550. The elastic means, for example torsion springs, presses the second wall portions 541. Each longer second wall portion 541a thus rotates around the third pivot 552 in the direction of rotation R1 and each shorter second wall portion 541b rotates around the fourth pivot 564 in the direction of rotation R1.

The driving means 530 further comprises further elastic means, not shown, arranged at the end 544. The further elastic means, for example, torsion springs, presses the first wall portions 542. Each first wall portion 542 thus rotates around the first pivot 560 in a further direction of rotation R2.

When the piston element 433 is in the first operating configuration X3, shown in Figure 6, the wall portions 540 are in the widened configuration Z1. In the widened configuration Z1 the passage section of a dose D through the transfer chamber 406 is maximum.

Figure 6 shows the same dose D in three subsequent positions, a first position B1, in which the dose D is picked up by the upper element 11, a second position B2, in which the dose D penetrates inside the lower element 401 and a third position B3 in which the dose D rests on the first closure element 417 and on the second closure element 418.

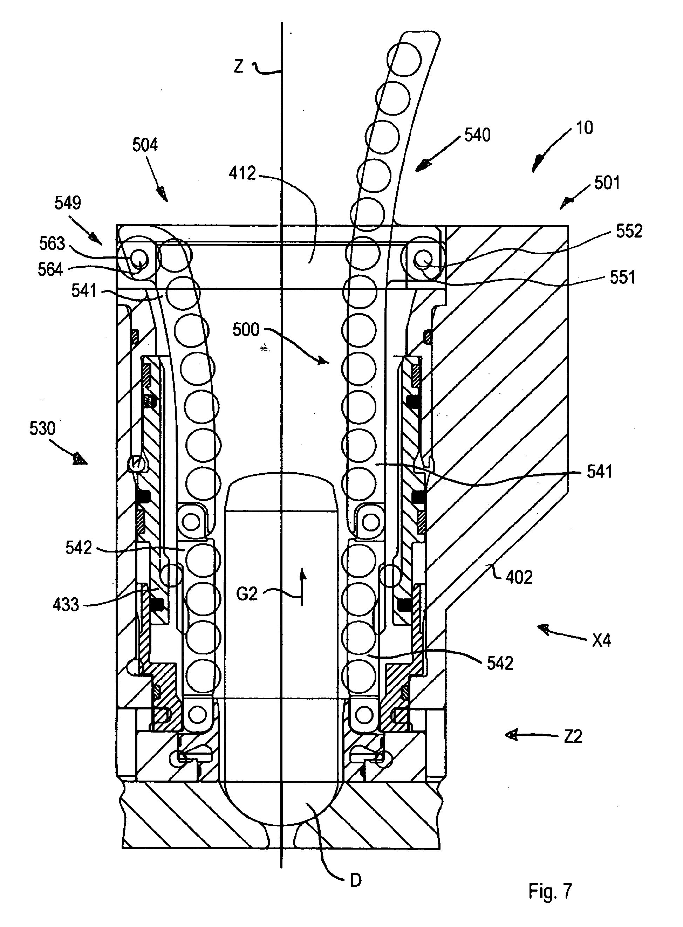

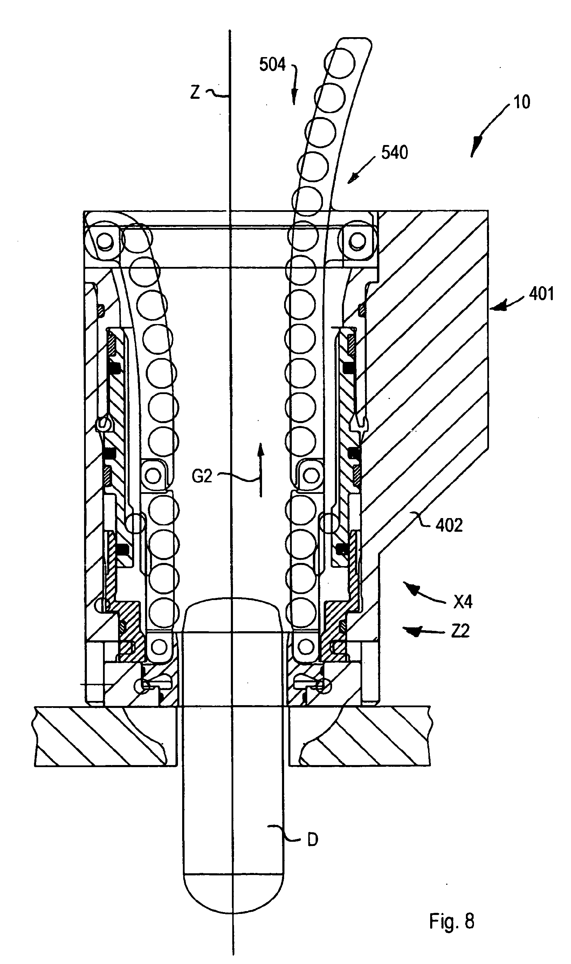

When the driving means moves the piston element 433 from the first operating configuration X3 to the second operating configuration X4, as shown in Figures 7 and 8, the driving roller 570 slides by rolling in the second guide groove 572 so as to move the first wall portions 542 - and the second wall portions 541 hinged to the first wall portions 542 - towards the longitudinal axis Z. Each first wall portion 542 thus rotates - by overcoming the resistance of the further elastic means - in a direction opposite the further direction of rotation R2. Each second wall portion 541, being rotatably connected to a corresponding first wall portion 542, rotates - by overcoming the resistance of the elastic means - in a direction opposite the direction of rotation R1. The wall portions 540, therefore, assume the narrowed configuration Z2. In the narrowed configuration Z2 the passage section of the dose D through the transfer chamber 406 is minimum, so that the wall portions 540 - and, in particular the rolling elements 415 - can interact with the dose D and guide it during the transfer from the lower element 401 to the moulding device 2.

In a first step of an operating cycle of the apparatus, the upper element 11 - i.e. the upper wall 554 - picks up a dose D just cut by the cutting means, near the mouth 4 of the extruder. The dose D is received in the recess 13, defined by the upper wall 554, inside which the dose D descends towards the lower element 401. Initially, the driving means 530 positions the wall portions 540 in the widened configuration Z1 so as to facilitate the entry of the dose D in the transfer chamber 406. Subsequently, the driving means 530 moves the wall means 540 from the widened configuration Z1 to the narrowed configuration Z2 so as to guide the dose D just before it passes from the lower element 501 to the die 6 and while the dose D passes from the lower element 501 to the die 6.

Alternatively to what has been shown in Figures 6 to 8, 10 and 11, the second wall portions 541 may all have the same length. In this case, the lower elements are so shaped that the wall portions do not extend outside the seat 403, similar to that shown in Figures 2 to 4.

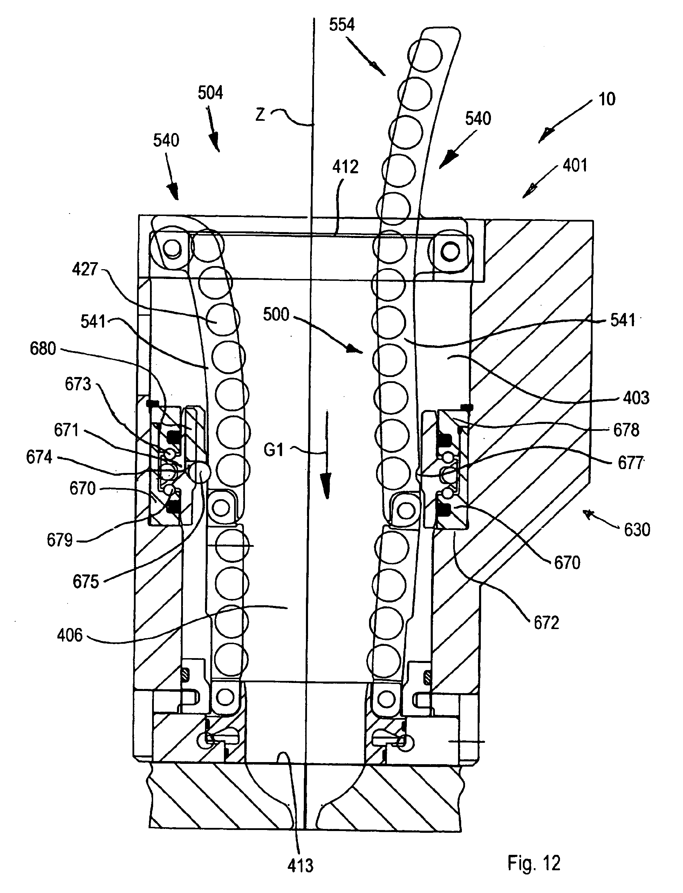

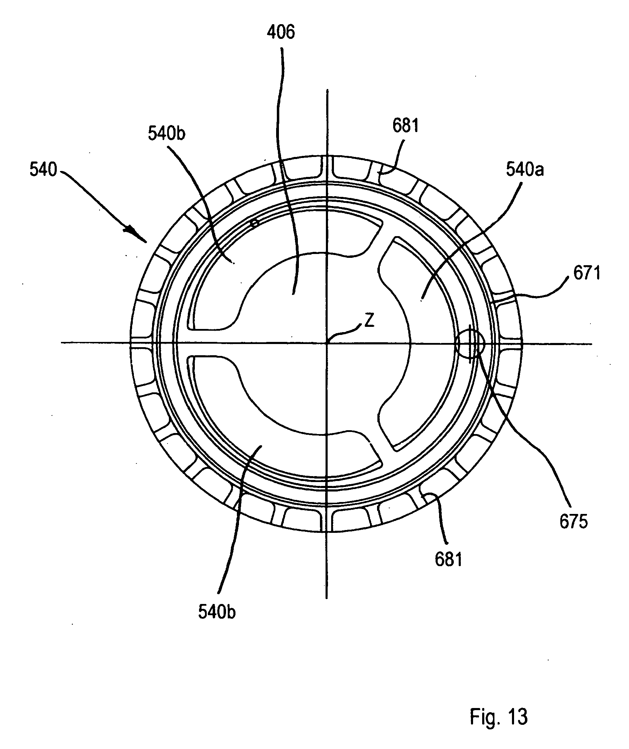

Upper elements 11 can therefore be associated to these lower elements, which upper elements are provided with rolling means 15 reducing the risk that the doses D adhere to the recess 13 and allowing the doses to be transferred from the upper elements 11 to the lower elements 401 at high speed. Alternatively, known type of upper elements i.e. without rolling means, may be associated to these lower elements. With reference to Figures 12 and 13, a transferring element 10 is shown comprising a lower element 401 similar to that shown in Figures 6 to 8 and provided with driving means 630. The driving means 630 comprises a supporting element 670 which rests on a protruding wall 672 provided inside the seat 403. The supporting element 670 slidably supports a ring-shaped body 671 arranged between the supporting element 670 and the wall portions 540. The ring-shaped body 671 is held in position by a locking body 678 that is nearer to the inlet opening 412 than the supporting element 670, i.e. arranged upstream of the supporting element 670 along the direction G1.

First rolling means 673 is arranged between the supporting element 670 and the ring-shaped body 671.

Second rolling means 679 is arranged between the locking elements 678 and the ring-shaped body 671.

Owing to the first rolling means 673 and the second rolling means 679 the ring-shaped body 671 can rotate around the longitudinal axis Z in relation to the supporting element 670.

The lower element 401 comprises tubular element means 504 comprising a plurality of wall portions 540. The wall portions 540 define wall means 500 which internally delimits the transfer chamber 406.

The wall portions 540 support rollers 427. As shown in Figure 13, the tubular element means 504 comprises three wall portions 540, each of which support two rows of rollers.

Alternatively, the tubular element means 504 may comprise a number of wall portions 540 different from three.

The wall portions 540 may be similar to those disclosed with reference to Figures 6 to 9, i.e. each wall portion 540 may comprise a first wall portion 542 and a second wall portion 541 mutually hinged.

On a part of the ring-shaped body 671 which faces the wall portions 540 a cavity 674 is obtained in which a pushing element may be housed, for example, ball means 675. The ball means 675 comprises a first portion received in the cavity 674 and a second portion which projects outside from the cavity 674 to interact with the wall portions 540.

In an area of each wall portion 540 - in particular in an area of each second wall portion 541 - a guide groove 677 is obtained which partially receives the ball means 675.

The ball means 675 is held in position by a further locking body 680 that is nearer to the inlet body 412 than the support element 670, i.e. arranged upstream of the supporting element 670 along the direction G1.

The driving means 630 comprises a supply device, not shown, arranged for supplying a fluid, for example, compressed air, which causes the ring-shaped body 671 to rotate around the longitudinal axis Z. The ring-shaped body 671 may comprise a plurality of walls 681 arranged transversely in relation to a supply direction of a flow of the above-mentioned fluid. The ring-shaped body 671 therefore defines a rotor element of the driving means 630.

The ball means 675 rotates together with the ring-shaped body 671 interacting in succession with the wall portions 540. In particular, as shown in Figure 13, at every moment of an operating cycle, the ball means 675 interacts with (at least) one wall portion 540a, so as to move it towards the longitudinal axis Z, but do not interact with the remaining wall portions 540b.

When the ball means 675 interacts with the second wall portion 541, the second wall portion 541 rotates together with the first wall portion 542 towards the inside of the transfer chamber 406.

When the ball means 675 does not interact with the second wall portion 541, the second wall portion 541 is arranged abutting on the ring-shaped body 671 by the action of the elastic means and the further elastic means.

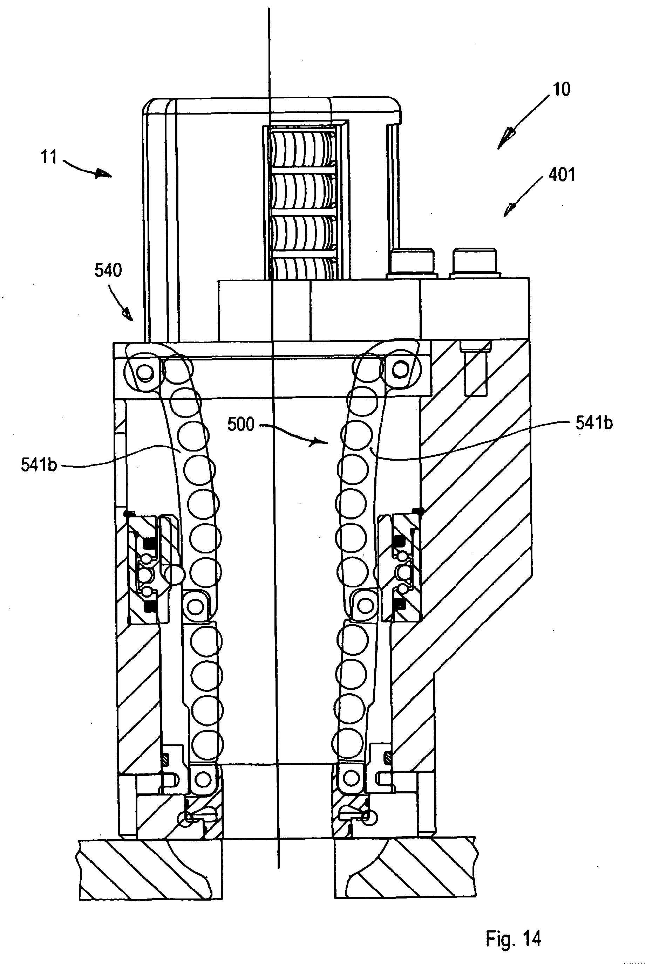

During the descent of the dose D into the transfer chamber 406, the driving means 630 changes, in particular continuously changes, the passage section of the transfer chamber 406 so as to facilitate the descent of the dose D into the transfer chamber 406. The driving means 630 further gives the wall portions 540 a vibrating action which prevents the dose D from adhering to the wall portions 540. With reference to Figure 14, a lower element 401 is shown similar to that shown in Figures 2 to 4, i.e. a lower element 401 in which the second wall portions 541 all have the same length and do not extend outside the seat 403.

In this case, an upper element 11, of the type shown with reference to Figures 2 to 4, may be associated to the lower element 401.

In an embodiment not shown, the lower element comprises wall portions 440 of the type shown with reference to Figures 2 to 4, i.e. wall portions each comprising a single element and not a plurality of elements hinged to one another.

## Claims

1. Apparatus comprising receiving means (6), transferring means (10) for transferring an object (D) towards said receiving means (6), said object comprising a dose (D) of flowable material, in particular a dose of plastics; said transferring means (10) having a recess (406) for receiving said object, said recess (406) being delimited by wall means (500), **characterized in that** said apparatus further comprises driving means (430; 460; 530; 630) arranged for moving at least part (440; 540) of said wall means (500) so as to change a passage section of said object (D) through said recess (406).

2. Apparatus according to claim 1, wherein said wall means (500) comprises a plurality of wall portions (440; 540) mutually placed side by side.

3. Apparatus according to claim 2, wherein said wall portions (440; 540) are positioned so as to define angular sectors of said recess (406).

4. Apparatus according to claim 2, or 3, wherein said driving means (430; 460; 530; 630) is so shaped as to move said wall portions (440; 540) towards and away with respect to a longitudinal axis (Z) of said recess (406).

5. Apparatus according to claim 4, wherein said driving means (430; 460; 530) comprises pressing means (433; 461) arranged for moving at least one area of said wall portions (440; 540) towards said longitudinal axis (Z) and contrast means arranged for moving away said at least one area from said longitudinal axis (Z).

6. Apparatus according to claim 5, wherein said contrast means comprises elastic means.

7. Apparatus according to claim 5, or 6, wherein said pressing means comprises piston means (433; 461) driven by an operating fluid and movable substantially parallel to said longitudinal axis (Z).

8. Apparatus according to any one of claims 5 to 7, wherein said driving means (430; 460; 530) is so shaped as to move said wall portions (440; 540) between a widened configuration (Z1), in which said wall portions (440; 450) are farther from said longitudinal axis (Z), and a narrowed configuration (Z2), in which said wall portions (440; 450) are nearer said longitudinal axis (Z).

9. Apparatus according to claim 8, wherein said driving means (430; 460; 530) moves all the wall portions (440; 540) substantially simultaneously towards, and away from, said longitudinal axis (Z).

10. Apparatus according to any one of claims 2 to 9, wherein said wall portions (440) are rotatably supported to a body of said transferring means (10).

11. Apparatus according to claim 10, wherein said wall portions (440) are hinged to said body near an inlet opening (412) through which said object (D) enters said recess (406).

12. Apparatus according to claim 10, wherein said wall portions (440) are hinged to said body near an outlet opening (413) through which said object (D) exits from said recess (406).

13. Apparatus according to any one of claims 10 to 12, wherein some of said wall portions (440) comprise an area extending outside said recess (406) to interact with said object (D).

14. Apparatus according to any preceding claim, wherein said wall means (500) comprises rolling means (415) to guide said object (D) inside said transferring means (10), wherein said rolling means (415) comprises a plurality of rolling elements (427).

15. Apparatus according to claim 14, wherein the rolling elements (427) of said plurality of rolling elements are rotatable around respective rotation axes arranged transverse to a longitudinal axis (Z) of said recess (406).

16. Apparatus according to claim 15, wherein said rotation axes are substantially parallel to one another.

17. Apparatus according to claim 15, or 16, wherein said rotation axes are substantially orthogonal to said longitudinal axis.

18. Apparatus according to any one of claims 15 to 17, as claim 14 is appended to any one of claims 2 to 13, wherein each of said wall portions (440; 540) comprises at least one row (429) of said rolling elements extending along said longitudinal axis (Z).

19. Apparatus according to any preceding claim, wherein said transferring means comprises a plurality of transferring elements (10) movable along a closed path (P1).

20. Apparatus according to any preceding claim, and comprising an extruding device (3) for extruding said flowable material, said receiving means comprising forming means (6) for forming said dose (D), wherein said forming means comprises compression-moulding mould means (6).

21. Apparatus according to claim 20, wherein said compression-moulding mould means comprises a plurality of moulding units (6) mounted on a rotatable carousel (5).

22. Apparatus according to claim 20 or claim 21, wherein said forming means (6) is so shaped as to obtain a container preform from said dose (D).

## Patentansprüche

1. Vorrichtung mit einem Aufnahmemittel (6), einem Überführungsmittel (10) zum Überführen eines Objekts (D) in Richtung des Aufnahmemittels (6), wobei das Objekt eine Dosis (D) von einem fließfähigen Material aufweist, insbesondere eine Dosis von einem Kunststoff; wobei das Überführungsmittel (10) eine Ausnehmung (406) zum Aufnehmen des Objekts aufweist, wobei die Ausnehmung (406) durch ein Wandmittel (500) begrenzt ist, **dadurch gekennzeichnet, dass** die Vorrichtung des Weiteren ein Antriebsmittel (430; 460; 530; 630) aufweist, das dazu ausgebildet ist, mindestens einen Teil (440; 540) des Wandmittels (500) zu bewegen, um einen Durchgangsabschnitt des Objekts (D) durch die Ausnehmung (406) zu ändern.

2. Vorrichtung nach Anspruch 1, wobei das Wandmittel (500) eine Mehrzahl von Wandabschnitten (440; 540) aufweist, die gegenseitig Seite an Seite angeordnet sind.

3. Vorrichtung nach Anspruch 2, wobei die Wandabschnitte (440; 540) positioniert sind, um Winkelsektoren der Ausnehmung (406) zu definieren.

4. Vorrichtung nach Anspruch 2 oder 3, wobei das Antriebsmittel (430; 460; 530; 630) derart geformt ist, um die Wandabschnitte (440; 540) in Richtung und weg von einer longitudinalen Achse (Z) der Ausnehmung (406) zu bewegen.

5. Vorrichtung nach Anspruch 4, wobei das Antriebsmittel (430; 460; 530) ein Druckmittel (433; 461) aufweist, das dazu ausgebildet ist, mindestens einen Bereich der Wandabschnitte (440; 540) in Richtung der longitudinalen Achse (Z) zu bewegen, und ein Kontrastmittel bzw. Einzugmittel aufweist, das dazu ausgebildet ist, den mindestens einen Bereich von der longitudinalen Achse (Z) wegzubewegen.

6. Vorrichtung nach Anspruch 5, wobei das Kontrastmittel ein elastisches Mittel aufweist.

7. Vorrichtung nach Anspruch 5 oder 6, wobei das Druckmittel ein Kolbenmittel (433; 461) aufweist, das durch ein Betriebsfluid angetrieben ist und im Wesentlichen parallel zur longitudinalen Achse (Z) bewegbar ist.

8. Vorrichtung nach einem der Ansprüche 5 bis 7, wobei das Antriebsmittel (430; 460; 530) derart geformt ist, um die Wandabschnitte (440; 540) zwischen einer verbreiterten Konfiguration (Z1), in der die Wandabschnitte (440; 450) weiter von der longitudinalen Achse (Z) weg sind, und einer verengten Konfiguration (Z2), in der die Wandabschnitte (440; 450) näher an der longitudinalen Achse (Z) sind, zu bewegen.

9. Vorrichtung nach Anspruch 8, wobei das Antriebsmittel (430; 460; 530) alle die Wandabschnitte (440; 540) im Wesentlichen gleichzeitig in Richtung und weg von der longitudinalen Achse (Z) bewegt.

10. Vorrichtung nach einem der Ansprüche 2 bis 9, wobei die Wandabschnitte (440) rotierbar durch einen Körper der Überführungsmittel (10) gelagert sind.

11. Vorrichtung nach Anspruch 10, wobei die Wandabschnitte (440) schwenkbar an dem Körper nahe einer Einlassöffnung (412), durch die das Objekt (D) in die Ausnehmung (406) tritt, sind.

12. Vorrichtung nach Anspruch 10, wobei die Wandabschnitte (440) schwenkbar an dem Körper nahe einer Auslassöffnung (413), durch die das Objekt (D) aus der Ausnehmung (406) tritt, sind.

13. Vorrichtung nach einem der Ansprüche 10 bis 12, wobei einige der Wandabschnitte (440) einen Bereich aufweisen, der sich außerhalb der Ausnehmung (406) erstreckt, um mit dem Objekt (D) zusammenzuwirken.

14. Vorrichtung nach einem der voranstehenden Ansprüche, wobei das Wandmittel (500) ein Rollmittel (415) aufweist, um das Objekt (D) innerhalb des Überführungsmittels (10) zu führen, wobei das Rollmittel (415) eine Mehrzahl von Rollelementen (427) aufweist.

15. Vorrichtung nach Anspruch 14, wobei die Rollelemente (427) der Mehrzahl von Rollelementen drehbar um entsprechende Rotationsachsen sind, die transversal zu einer longitudinalen Achse (Z) der Ausnehmung (406) angeordnet sind.

16. Vorrichtung nach Anspruch 15, wobei die Rotationsachsen im Wesentlichen parallel zueinander sind.

17. Vorrichtung nach Anspruch 15 oder 16, wobei die Rotationsachsen im Wesentlichen orthogonal zu der longitudinalen Achse sind.

18. Vorrichtung nach einem der Ansprüche 15 bis 17, wobei Anspruch 14 auf einen der Ansprüche 2 bis 13 rückbezogen ist, wobei jeder der Wandabschnitte (440; 540) mindestens eine Reihe (429) der Rollelemente aufweist, die sich entlang der longitudinalen Achse (Z) erstrecken.

19. Vorrichtung nach einem der voranstehenden Ansprüche, wobei das Überführungsmittel eine Mehrzahl von Überführungselementen (10) aufweist, die entlang einem geschlossenen Weg (P1) bewegbar sind.

20. Vorrichtung nach einem der voranstehenden Ansprüche, und mit einer Extrudiervorrichtung (3) zum Extrudieren des fließfähigen Materials, wobei das Aufnahmemittel ein Formmittel (6) zum Formen der Dosis (D) aufweist, wobei das Formmittel ein Pressform-Formmittel aufweist (6).

21. Vorrichtung nach Anspruch 20, wobei das Pressform-Formmittel eine Mehrzahl von Formeinheiten (6) aufweist, die auf einem drehbaren Karussell (5) befestigt sind.

22. Vorrichtung nach Anspruch 20 oder Anspruch 21, wobei das Formmittel (6) derart geformt ist, um eine Behältnis-Vorform von der Dosis (D) zu enthalten.

## Revendications

1. Dispositif comprenant des moyens récepteurs (6), des moyens de transfert (10) pour transférer un objet (D) auxdits moyens récepteurs (6), ledit objet comprenant une dose (D) de matériau fluide, en particulier une dose de matière plastique ; lesdits moyens de transfert (10) présentant un évidement (406) destiné à recevoir ledit objet, ledit évidement (406) étant délimité par des moyens de paroi (500), ***caractérisé en ce que*** ledit dispositif comprend en outre des moyens d'entraînement (430 ; 460 ; 530 ; 630) prévus pour déplacer au moins une partie (440 ; 540) desdits moyens de paroi (500) afin de modifier une section de passage dudit objet (D) à travers ledit évidement (406).

2. Dispositif selon la revendication 1, dans lequel lesdits moyens de paroi (500) comprennent une pluralité de portions (440 ; 540) de paroi placées entre elles côte à côte.

3. Dispositif selon la revendication 2, dans lequel lesdits moyens de portions (440 ; 540) de paroi sont positionnés de manière à définir des secteurs angulaires dudit évidement (406).

4. Dispositif selon la revendication 2 ou 3, dans lequel lesdits moyens d'entraînement (430 ; 460 ; 530 ; 630) sont conformés de manière à déplacer lesdites portions (440 ; 540) de paroi en les rapprochant et les éloignant par rapport à un axe longitudinal (Z) dudit évidement (406).

5. Dispositif selon la revendication 4, dans lequel lesdits moyens d'entraînement (430 ; 460 ; 530) comprennent des moyens de poussée (433 ; 461) prévus pour déplacer au moins une zone desdites portions (440 ; 540) de paroi en direction dudit axe longitudinal (Z) et des moyens contraires prévus pour écarter ladite au moins une zone dudit axe longitudinal (Z).

6. Dispositif selon la revendication 5, dans lequel lesdits moyens contraires comprennent des moyens élastiques.

7. Dispositif selon la revendication 5 ou 6, dans lequel lesdits moyens de poussée comprennent des moyens de piston (433 ; 461) entraînés par un fluide de travail et mobiles de manière essentiellement parallèle audit axe longitudinal (Z).

8. Dispositif selon l'une quelconque des revendications 5 à 7, dans lequel lesdits moyens d'entraînement (430 ; 460 ; 530) sont conformés de manière à déplacer lesdits portions (440 ; 540) de paroi entre une configuration élargie (Z1), dans laquelle lesdites portions (440 ; 540) de paroi sont plus éloignées dudit axe longitudinal (Z), et une configuration rétrécie (Z2), dans laquelle lesdites portions (440 ; 450) de paroi sont plus près dudit axe longitudinal (Z).

9. Dispositif selon la revendication 8, dans lequel lesdits moyens d'entraînement (430 ; 460 ; 530) rapprochent, et éloignent, de manière essentiellement simultanée, toutes les portions (440 ; 540) de paroi dudit axe longitudinal (Z).

10. Dispositif selon l'une quelconque des revendications 2 à 9, dans lequel lesdites portions (440) de paroi sont supportées de manière rotative par un corps desdits moyens de transfert (10).

11. Dispositif selon la revendication 10, dans lequel lesdites portions (440) de paroi sont articulées audit corps à proximité d'une ouverture (412) d'entrée par laquelle ledit objet (D) pénètre dans ledit évidement (406).

12. Dispositif selon la revendication 10, dans lequel lesdites portions (440) de paroi sont articulées audit corps à proximité d'une ouverture (413) de sortie par laquelle ledit objet (D) ressort dudit évidement (406).

13. Dispositif selon l'une quelconque des revendications 10 à 12, dans lequel certaines desdites portions (440) de paroi comprennent une zone s'étendant à l'extérieur dudit évidement (406) pour interagir avec ledit objet (D).

14. Dispositif selon l'une quelconque des revendications précédentes, dans lequel lesdits moyens (500) de paroi comprennent des moyens (415) de roulement pour guider ledit objet (D) à l'intérieur desdits moyens de transfert (10), dans lequel lesdits moyens (415) de roulement comprennent une pluralité d'éléments (427) de roulement.

15. Dispositif selon la revendication 14, dans lequel les éléments (427) de roulement de ladite pluralité d'éléments de roulement sont rotatifs autour d'axes de rotation respectifs disposés transversalement à un axe longitudinal (Z) dudit évidement (406).

16. Dispositif selon la revendication 15, dans lequel lesdits axes de rotation sont sensiblement parallèles entre eux.

17. Dispositif selon la revendication 15 ou 16, dans lequel lesdits axes de rotation sont sensiblement orthogonaux audit axe longitudinal.

18. Dispositif selon l'une quelconque des revendications 15 à 17, lorsque la revendication 14 est dépendante de l'une quelconque des revendications 2 à 13, dans lequel chacune desdites portions (440 ; 540) de paroi comprend au moins une rangée (429) desdits éléments de roulement s'étendant le long dudit axe longitudinal (Z).

19. Dispositif selon l'une quelconque des revendications précédentes, dans lequel lesdits moyens de transfert comprennent une pluralité d'éléments (10) de transfert mobiles le long d'un parcours en boucle (P1).

20. Dispositif selon l'une quelconque des revendications précédentes, et comprenant un dispositif extrudeur (3) pour extruder ledit matériau fluide, lesdits moyens récepteurs comprenant des moyens (6) de formage pour former ladite dose (D), dans lequel lesdits moyens de formage comprennent des moyens (6) de moule de moulage par compression.

21. Dispositif selon la revendication 20, dans lequel lesdits moyens de moule de moulage par compression comprennent une pluralité d'unités (6) de moulage montées sur un carrousel rotatif (5).

22. Dispositif selon la revendication 20 ou 21, dans lequel lesdits moyens (6) de formage sont conformés de manière à obtenir une préforme de récipient à partir de ladite dose (D).
